# EUROPEAN PATENT SPECIFICATION

(11) **EP 3 725 560 B1**
(45) Date of publication and mention of the grant of the patent: **15.02.2023**
(21) Application number: 18888165.0
(22) Date of filing: 30.11.2018
(51) Int. Cl.: B60C 13/00, B60C 11/13

(54) **TIRE**
REIFEN
PNEUMATIQUE

(30) Priority: 11.12.2017 JP 2017237174
(43) Date of publication of application: 21.10.2020
(73) Proprietor: Bridgestone Corporation, Chuo-Ku Tokyo 104-8340 (JP)
(72) Inventor: IWABUCHI, Sotaro, Tokyo 104-8340 (JP)
(74) Representative: Marks & Clerk LLP
(86) International application number: PCT/JP2018/044301
(87) International publication number: WO 2019/116937

(56) References cited:
- WO-A1-2014/199731
- WO-A1-2016/182076
- FR-A1- 3 023 508
- JP-A- 2002 522 294
- JP-A- 2002 524 329
- JP-A- 2012 188 037
- JP-A- 2016 155 504
- JP-A- 2016 215 695
- US-A1- 2010 000 638

## Description

### Technical Field

The present invention relates to a tire in which minute protrusions are formed at an outer face of the tire.

### Background Art

Tires have hitherto been formed with minute protrusions on a side portion of the tire to form a contrasting patterned region. For example, International Publication (WO) No. 2012/131089 discloses technology in which a large contrast is created on a side portion of a tire using plural protrusions formed across an entire patterned region. Attention is also drawn to the disclosures of FR3 023 508, WO2014/199731 and WO2016/182076.

### SUMMARY OF INVENTION

### Technical Problem

A decorative portion on a side portion of a tire includes one region formed with protrusions. By using the protrusions to control light reflection, the brightness of this one region is set lower than the brightness of another region where light reflection is not controlled. However, if the brightness of the entirety of the one region where the protrusions are formed is simply lowered to a uniform brightness, the scope for expression using the decorative portion of the tire where the protrusions are formed is limited.

The present invention aims to increase the scope for expression using a decorative portion including a region where protrusions are formed at a tire.

### Solution to Problem

A tire according to the present invention includes a decorative portion that is formed at a tire outer face and that includes a base face, and a first patterned region and a second patterned region, in each of which plural protrusions, that project from the base face of the decorative portion to a projection height of from 0.1 mm to 1.0 mm, are formed at a pitch of from 0.1 mm to 1.0 mm. Protrusions of the first patterned region are coupled together and protrusions of the second patterned region are coupled together. Shapes of the protrusions in the first patterned region and the second patterned region are different from each other as viewed along a direction orthogonal to the base face.

### Advantageous Effects of Invention

The present invention is capable of increasing the scope for expression using a decorative portion including a region where protrusions are formed at a tire.

### BRIEF DESCRIPTION OF DRAWINGS

Fig. 1 is an enlarged side view illustrating an example of the appearance of a decorative portion of a tire according to a first exemplary embodiment in the present invention.
Fig. 2 is an enlarged side view illustrating another example of the appearance of a decorative portion of a tire according to the first exemplary embodiment in the present invention.
Fig. 3 is a plan view illustrating protrusions formed in a first patterned region.
Fig. 4 is an enlarged plan view illustrating protrusions formed in a first patterned region.
Fig. 5 is a cross-section illustrating protrusions.
Fig. 6 is an enlarged plan view illustrating rib-shaped protrusions formed in a second patterned region.
Fig. 7 is a perspective view illustrating a decorative portion provided to a groove of a tread of a tire according to a second exemplary embodiment in the present invention.

### DESCRIPTION OF EMBODIMENTS

### First Exemplary Embodiment

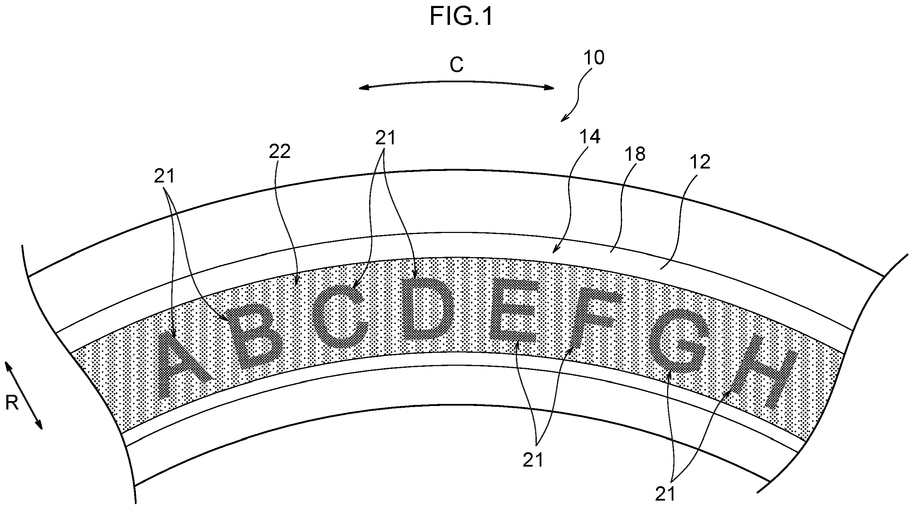

Explanation follows regarding an example of a tire 10 according to a first exemplary embodiment in the present invention, with reference to Fig. 1 to Fig. 6. Note that in the drawings, the arrow C indicates a tire circumferential direction, the arrow R indicates a tire radial direction, and the arrow W indicates a tire width direction.

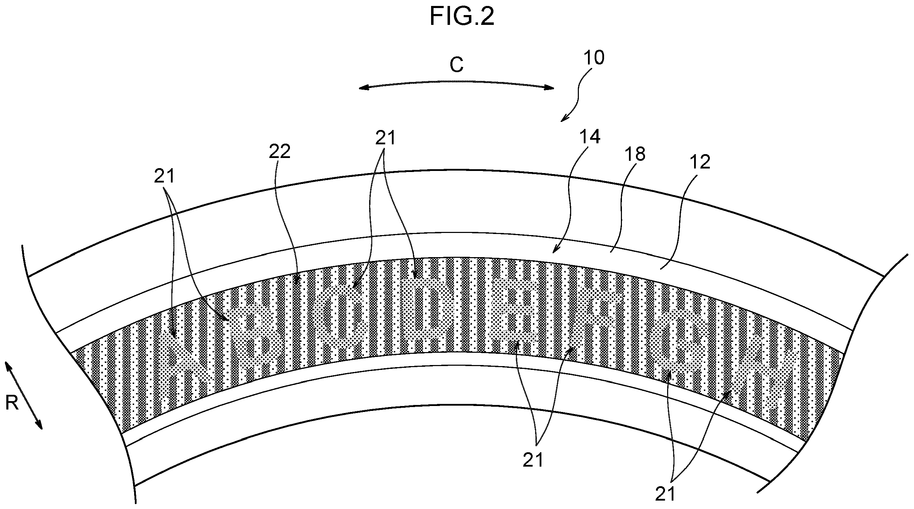

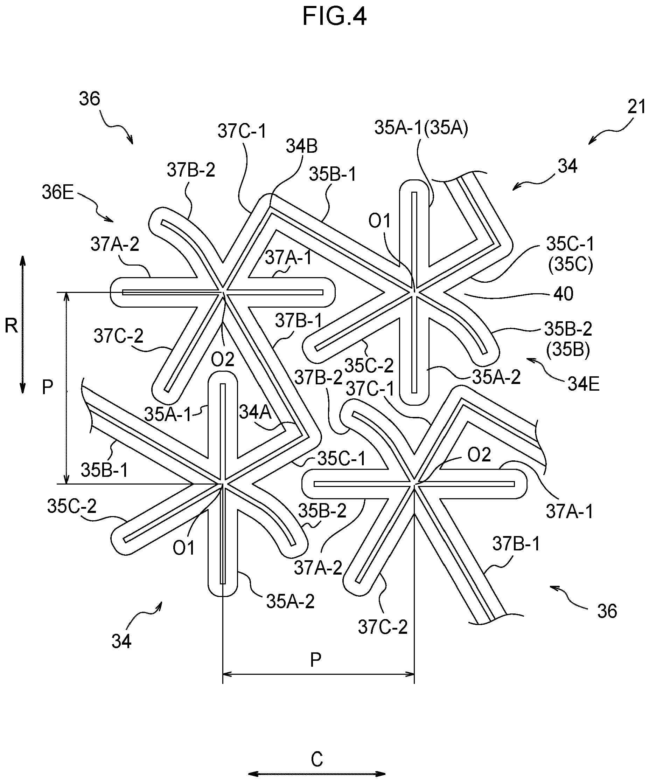

As illustrated in Fig. 1 and Fig. 2, a decorative portion 14 is formed at a tire side portion 12, serving as an example of an outer face of the tire 10. As viewed along an axial direction of the tire 10, for example, the decorative portion 14 has a circular arc shape and is disposed at a desired position in the tire circumferential direction. The decorative portion 14 includes a base face 40 (Fig. 4). The base face 40 is set back with respect to another region 18 of the tire side portion 12, this being a region outside the decorative portion 14 that is not formed with protrusions or the like. The base face 40 configures a bottom face of the decorative portion 14, and has a curved face shape with a convex profile toward the width direction outer side of the tire 10 as viewed along the tire circumferential direction. In the present exemplary embodiment, the base face 40 is set back by 0.4 mm with respect to the other region 18.

First patterned regions 21 and a second patterned region 22 that appear black due to exhibiting lower brightness than the other region 18 are formed in the decorative portion 14. As an example, the first patterned regions 21 and the second patterned region 22 have the same brightness as each other.

The second patterned region 22 formed at the decorative portion 14 extends in the tire circumferential direction. The first patterned regions 21 are used to express letters of the alphabet, such as A to H, in the decorative portion 14. Any other desired letters, graphics, symbols, patterns, or the like may also be expressed by the first patterned regions 21. The first patterned regions 21 are arranged within the range of the second patterned region 22. In other words, the first patterned regions 21 are adjacent to the second patterned region 22 and are surrounded by the second patterned region 22.

Note that the first patterned regions 21 and the second patterned region 22 are formed by recesses and projections provided to a mold (die) for molding the tire 10 at portions corresponding to the first patterned regions 21 and the second patterned region 22. From the perspective of visibility in a state in which the tire 10 is mounted to a vehicle, the first patterned regions 21 and the second patterned region 22 are preferably disposed further toward the tire radial direction outer side than a tire maximum width portion (a portion where the linear distance between tire side portions is at its maximum).

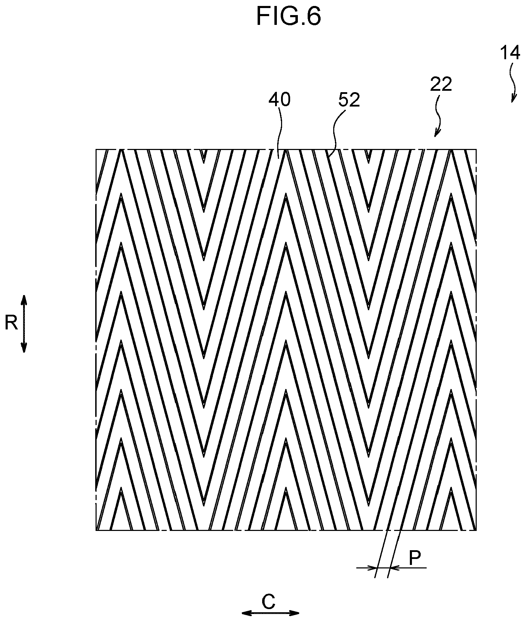

Rib-shaped protrusions 52, serving an example of protrusions, are formed in the second patterned region 22 (Fig. 6).

### First Patterned regions 21

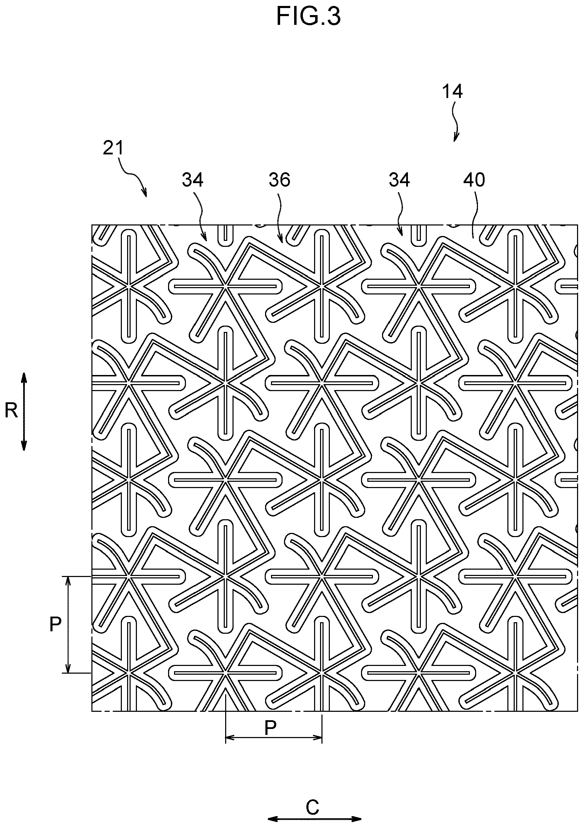

First asterisk protrusions 34 and second asterisk protrusions 36, serving as an example of plural protrusions projecting from the base face 40, are formed in the first patterned regions 21 (Fig. 3 and Fig. 4). The first asterisk protrusions 34 and the second asterisk protrusions 36 are arranged alternately to each other in both the tire circumferential direction and the tire radial direction.

### First Asterisk Protrusions 34

As illustrated in Fig. 4, as viewed along the direction orthogonal to the base face 40 (in a rotation axis direction of the tire 10 (Fig. 1 and Fig. 2)), each of the first asterisk protrusions 34 is configured by first extension portions 35A-1, 35A-2, second extension portions 35B-1, 35B-2, and third extension portions 35C-1, 35C-2 that extend in different directions to one another from a center O1, serving as an origin. These six extension portions are hereafter collectively referred to as extension portions 34E. Together, one and another of these extension portions 34E (excluding extension portions 34E that extend in opposite directions to each other from the center O1) configure linear shapes bent at the center O1.

The first extension portion 35A-1 and the first extension portion 35A-2 extend in opposite directions to each other from the center O1, such that the first extension portion 35A-1 and the first extension portion 35A-2 configure a continuous straight line shape. The first extension portion 35A-1 extends toward the tire radial direction outer side from the center O1, and the first extension portion 35A-2 extends toward the tire radial direction inner side from the center O1. The first extension portion 35A-1 and the first extension portion 35A-2 have similar lengths to each other. The first extension portion 35A-1 and the first extension portion 35A-2 are hereafter collectively referred to as the first extension portions 3 SA.

The second extension portion 35B-1 and the second extension portion 35B-2 extend in opposite directions to each other from the center O1, such that the second extension portion 35B-1 and the second extension portion 35B-2 configure a continuous straight line shape. The second extension portion 35B-1 and the second extension portion 35B-2 are inclined with respect to the tire circumferential direction such that end portions thereof on one tire circumferential direction side (the left side in Fig. 4) is positioned further toward the tire radial direction outer side than end portions thereof on the other tire circumferential direction side (the right side in Fig. 4).

The second extension portion 35B-1 extends toward the one tire circumferential direction side from the center O1, and the second extension portion 35B-2 extends toward the other tire circumferential direction side from the center O1. The second extension portion 35B-1 is longer than the second extension portion 35B-2. The second extension portion 35B-2 curves toward the tire radial direction inner side at a leading end side portion. The second extension portion 35B-1 and the second extension portion 35B-2 are hereafter collectively referred to as the second extension portions 35B.

The third extension portion 35C-1 and the third extension portion 35C-2 extend in opposite directions to each other from the center O1, such that the third extension portion 35C-1 and the third extension portion 35C-2 configure a continuous straight line shape. The third extension portion 35C-1 and the third extension portion 35C-2 are inclined with respect to the tire circumferential direction such that an end portion on the one tire circumferential direction side (the left side in Fig. 4) is positioned further toward the tire radial direction inner side than an end portion on the other tire circumferential direction side (the right side in Fig. 4).

The third extension portion 35C-1 extends toward the other tire circumferential direction side from the center O1, and the third extension portion 35C-2 extends toward the one tire circumferential direction side from the center O1. The third extension portion 35C-1 is shorter than the third extension portion 35C-2. The third extension portion 35C-1 and the third extension portion 35C-2 are hereafter collectively referred to as the third extension portions 35C.

A 60° angle is formed between adjacent extension portions 34E of the six extension portions 34E. In other words, the six extension portions 34E extend from the center O1 in a radial shape to form the first asterisk protrusion 34.

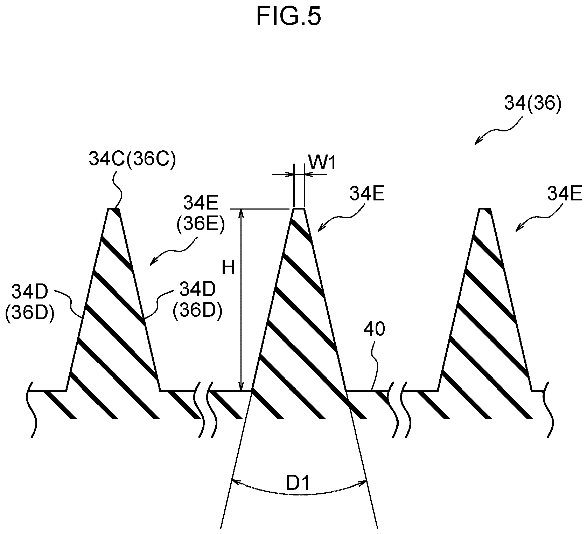

As illustrated in Fig. 5, each of the extension portions 34E of the first asterisk protrusion 34 has a substantially isosceles triangle shaped cross-section profile including a flat apex face 34C as sectioned along a direction orthogonal to its extension direction. Namely, the first asterisk protrusion 34 includes the apex face 34C and pairs of side faces 34D. In the present exemplary embodiment, a width (W1 in Fig. 5) of the apex face 34C is 0.02 mm, and an apex angle (D1 in Fig. 5) of the first asterisk protrusion 34 is 26°. A height (H in Fig. 5) of the first asterisk protrusion 34 is a prescribed value from 0.1 mm to 1.0 mm. In cases in which the height of the protrusion (projection height) is less than 0.1 mm, it becomes difficult to mold the protrusion, and it might not be possible to attenuate incident light sufficiently to lower the brightness to a degree that appears black. By making the height of the protrusion 1.0 mm or less, the difference between the rigidity of the protruding portion and the rigidity of portions surrounding the protrusion is reduced, thereby suppressing localized concentration of stress.

Note that dimensions such as the height of the protrusions and pitch (interval) of the protrusions, described later, in the present exemplary embodiment may for example be measured using the One-Shot 3D Measuring Macroscope, VR-3000 Series, manufactured by Keyence Corporation.

### Second Asterisk Protrusions 36

As illustrated in Fig. 4, the second asterisk protrusions 36 are similar in shape to the first asterisk protrusions 34. Specifically, as viewed along the direction orthogonal to the base face 40, each of the second asterisk protrusions 36 has a shape obtained by rotating a first asterisk protrusion 34 clockwise through 90° about its center O1, and then top-to-bottom inverting the first asterisk protrusion 34 that has been rotated by 90° about its center O1.

Portions of the second asterisk protrusion 36 corresponding to the first extension portions 35A-1, 35A-2, the second extension portions 35B-1, 35B-2, the third extension portions 35C-1, 35C-2, and the center O1 of the first asterisk protrusion 34 are respectively referred to as first extension portions 37A-1, 37A-2, second extension portions 37B-1, 37B-2, third extension portions 37C-1, 37C-2, and a center 02. These six extension portions are hereafter collectively referred to as extension portions 36E.

A portion of the second asterisk protrusion 36 corresponding to the apex face 34C of the first asterisk protrusion 34 is referred to as an apex face 36C. Portions of the second asterisk protrusion 36 corresponding to the side faces 34D of the first asterisk protrusion 34 are referred to as side faces 36D (see Fig. 5).

### Other

As illustrated in Fig. 3, the first asterisk protrusions 34 and the second asterisk protrusions 36 are arranged alternately to each other in both the tire circumferential direction and the tire radial direction so as to completely fill the first patterned regions 21.

As illustrated in Fig. 4, for each of the first asterisk protrusions 34, the leading ends of the first extension portions 35A-1, 35A-2 are respectively inserted between the second extension portion 37B-2 and the third extension portion 37C-1, and between the second extension portion 37B-1 and the third extension portion 37C-2, of the adjacent second asterisk protrusions 36 in the tire radial direction. For each of the adjacent second asterisk protrusions 36, the leading ends of the first extension portions 37A-1, 37A-2 are respectively inserted between the second extension portion 35B-1 and the third extension portion 35C-2, and between the second extension portion 35B-2 and the third extension portion 35C-1, of the adjacent first asterisk protrusions 34 in the tire circumferential direction.

A leading end of the third extension portion 35C-1 of each of the first asterisk protrusions 34 is coupled to a leading end of the second extension portion 37B-1 of the second asterisk protrusion 36 that is disposed at the tire radial direction outer side of the first asterisk protrusion 34. A coupled portion 34A is thereby formed. A leading end of the second extension portion 35B-1 of each of the first asterisk protrusions 34 is coupled to a leading end of the third extension portion 37C-1 of the second asterisk protrusion 36 that is disposed on the one tire circumferential direction side of the first asterisk protrusion 34. A coupled portion 34B is thereby formed.

In this configuration, the first asterisk protrusions 34 and the second asterisk protrusions 36 are coupled together in a staircase pattern through the coupled portions 34A, 34B on progression from the tire radial direction inner side toward the tire radial direction outer side.

A pitch (hereafter referred to as a pitch P) between the center O1 and the center 02 of the first asterisk protrusions 34 and the second asterisk protrusions 36 that are adjacent to each other in the tire radial direction and the tire circumferential direction is a prescribed value from 0.1 mm to 1.0 mm. In cases in which the pitch P is less than 0.1 mm, it becomes difficult to mold the protrusions. In cases in which the pitch P is greater than 1.0 mm, it might not be possible to attenuate incident light sufficiently to lower the brightness to a degree that appears black.

Note that a brightness L* of the first patterned regions 21 and the second patterned region 22 that appear black in the present exemplary embodiment, as measured using a Handy Spectrophotometer (NF333) manufactured by Nippon Denshoku Industries Co. (Ltd), is for example a value within a region below 10. Namely, the possible range of the brightness L* is between 0 and 100, values closer to 0 having an appearance closer to black, and values closer to 100 having an appearance closer to white. As an example, the other region 18 of the tire side portion 12 that is outside the decorative portion 14 has a brightness L* value of greater than 20.

### Second Patterned region 22

As illustrated in Fig. 6, the second patterned region 22 illustrated in Fig. 1 and Fig. 2 is configured by plural rib-shaped protrusions 52, serving as an example of protrusions. As viewed along the direction orthogonal to the base face 40 of the decorative portion 14, the rib-shaped protrusions 52 are for example formed in V-shapes and coupled together so as to form a zigzag shape in the tire circumferential direction. Plural of the zigzag shaped rib-shaped protrusions 52 are formed at a pitch P in the tire radial direction. A cross-section profile of the rib-shaped protrusions 52, and the pitch P between the center of one rib-shaped protrusion 52 and the center of another rib-shaped protrusion 52 out of the adjacent rib-shaped protrusions 52 are the same as the cross-section profile and the pitch P of the first asterisk protrusions 34 and the second asterisk protrusions 36 illustrated in Fig. 5.

Note that the cross-section profile of the rib-shaped protrusions 52 may be different from the cross-section profile of the first asterisk protrusions 34 and so on.

Furthermore, the extension directions of some or all of the respective extension portions of the first asterisk protrusions 34 of the first patterned regions 21 are different directions to the directions of the linear elements of the rib-shaped protrusions 52 of the second patterned region 22.

### Operation and Advantageous Effects

Explanation follows regarding operation and advantageous effects of the tire according to the present exemplary embodiment.

In the decorative portion 14 of the tire side portion 12, light incident to the first asterisk protrusions 34 and the second asterisk protrusions 36 formed at the first patterned regions 21 hits the side faces 34D, 36D illustrated in Fig. 5. The incident light then attenuates as it is repeatedly reflected back and forth between the opposing side faces 34D, 36D before being reflected to the exterior.

Light incident to the rib-shaped protrusions 52 formed at the second patterned region 22 of the decorative portion 14 of the tire side portion 12 similarly attenuates as it is repeatedly reflected back and forth between opposing side faces (not illustrated in the drawings) before being reflected to the exterior.

In the other region 18 of the tire side portion 12 that is not formed with protrusions, light incident to the other region 18 is reflected toward the exterior by an outer face configuring the other region 18.

Note that the pitch P between the first asterisk protrusions 34 and the second asterisk protrusions 36 formed at the first patterned regions 21, and the pitch P between the rib-shaped protrusions 52 formed at the second patterned region 22 are both the same prescribed value from 0.1 mm to 1.0 mm. The brightness of these lowered brightness regions appears lower than the brightness of the other region 18 that is not formed with protrusions. Moreover, since the shapes of the protrusions in the first patterned regions 21 and the second patterned region 22 are different from one another as viewed along the direction orthogonal to the base face 40, the angle of light incidence differs even when the brightness is the same, such that the first patterned regions 21 or the second patterned region 22 can be made to appear to stand out.

In the present exemplary embodiment, the plural zigzagging rib-shaped protrusions 52 configure a herringbone pattern, such that faces orthogonal to the angle of light incidence and faces parallel to the angle of light incidence are alternately formed. This enables a striped pattern configured of light and dark areas to be expressed by the decorative portion 14 (Fig. 1 and Fig. 2).

The first asterisk protrusions 34 and the second asterisk protrusions 36 of the first patterned regions 21 are configured differently to the rib-shaped protrusions 52, and are combined with the second patterned region 22 including the rib-shaped protrusions 52 so as to enable a graphic design to be expressed by the difference in reflectivity. In the present exemplary embodiment, the first patterned regions 21 that express letters stand out from the second patterned region 22 that acts as a background. As illustrated in Fig. 1 and Fig. 2, the appearance varies according to the angle from which the decorative portion 14 of the tire 10 is viewed. In this manner, the scope for expression using the decorative portion 14 including the regions formed with the protrusions on the tire 10 can be increased.

In Fig. 4, the respective extension portions 34E of the first asterisk protrusions 34 extend along different directions to one another, and the respective extension portions 36E of the second asterisk protrusions 36 extend along different directions to one another. This enables a change in the appearance to be suppressed when the decorative portion 14 is viewed from different angles.

Each of the first asterisk protrusions 34 is configured by the six extension portions 34E that extend in different directions to one another and are coupled together at the center O1. Each of the second asterisk protrusions 36 is configured by the six extension portions 36E that extend in different directions to one another and are coupled together at the center 02. Both the first asterisk protrusions 34 and the second asterisk protrusions 36 are thus less liable to collapse, enabling the durability of both the first asterisk protrusions 34 and the second asterisk protrusions 36 to be improved.

Moreover, the first asterisk protrusions 34 and the second asterisk protrusions 36 are coupled together in a staircase pattern through the coupled portions 34A, 34B. The first asterisk protrusions 34 and the second asterisk protrusions 36 therefore support each other through the coupled portions 34A, 34B, thus suppressing the first asterisk protrusions 34 and the second asterisk protrusions 36 from collapsing and thereby enabling durability to be improved.

### Second Exemplary Embodiment

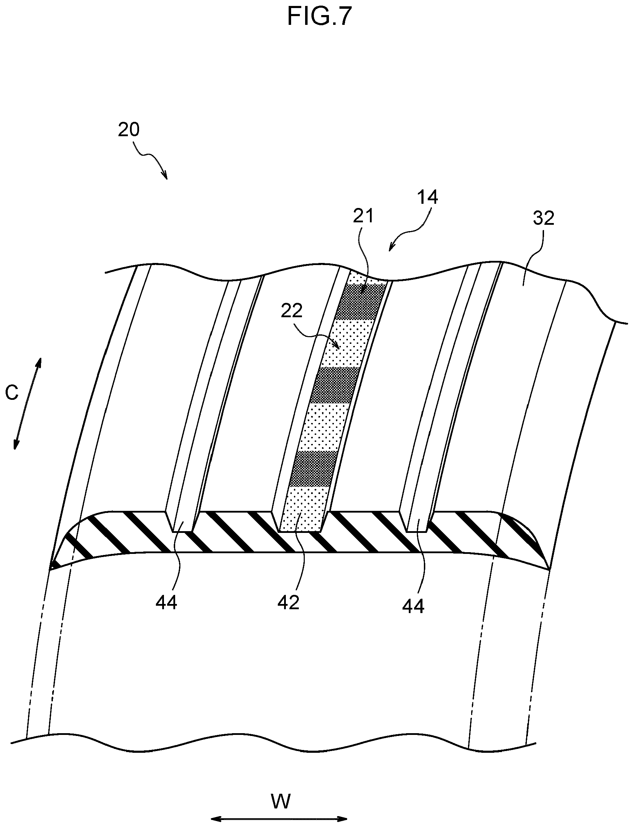

As illustrated in Fig. 7, in a tire 20 according to a second exemplary embodiment in the present invention, the decorative portion 14 is formed at a tread 32 of the tire 30. Specifically, plural circumferential direction grooves 42, 44 that extend in the tire circumferential direction are formed at the tread 32 of the tire 30 at intervals in the tire width direction (the arrow W in Fig. 7). The circumferential direction groove 42 is provided at a tire width direction center portion, and the circumferential direction grooves 44 are respectively provided on either tire width direction side of the circumferential direction groove 42. The decorative portion 14 is formed at the circumferential direction groove 42 at the tire width direction center portion, serving as an example of a tire outer face. First patterned regions 21, serving as an example of plural first patterned regions, and second patterned regions 22 are for example arranged alternately around the tire circumferential direction in the decorative portion 14. Providing the decorative portion 14 to the circumferential direction grooves 42 in this manner enables the scope for expression on the tread 32 to be increased.

Note that another patterned region (not illustrated in the drawings) may be provided in addition to the first patterned regions 21 and the second patterned regions 22. Moreover, the respective patterned regions may be arranged as desired. For example, the respective patterned regions may be arrayed in the tire width direction, or in an oblique direction that intersects the tire width direction.

Detailed configuration of the first patterned regions 21 and the second patterned regions 22 is similar to that in the first exemplary embodiment, and so explanation thereof is omitted.

### Other Exemplary Embodiments

Note that exemplary embodiments according to the present invention are not limited to the respective exemplary embodiments described above, and it would be obvious to a person skilled in the art that various other exemplary embodiments may be implemented within the scope of the present invention. For example, although the first asterisk protrusions 34 and the second asterisk protrusions 36 are provided to the first patterned regions 21 and the rib-shaped protrusions 52 are provided to the second patterned region 22, the protrusion types may be reversed. Moreover, the protrusions may have a shape other than that of the first asterisk protrusions 34, the second asterisk protrusions 36, and the rib-shaped protrusions 52.

## Claims

1. A tire (10) comprising:
a decorative portion (14) that is formed at a tire outer face and that includes a base face (40); and
a first patterned region (21) and a second patterned region (22), in each of which a plurality of protrusions (34, 36), that project from the base face of the decorative portion to a projection height of from 0.1 mm to 1.0 mm, are formed at a pitch of from 0.1 mm to 1.0 mm,
shapes of the protrusions in the first patterned region and the second patterned region being different from each other as viewed along a direction orthogonal to the base face, **characterized in that** the protrusions in the first patterned region are coupled together and the protrusions in the second patterned region are coupled together.

2. The tire of claim 1, wherein each of the protrusions in the first patterned region is formed including extension portions (35A, 35B, 35C, 37A, 37B, 37C) extending in a plurality of directions from an origin (O1, 02) as viewed along the direction orthogonal to the base face.

3. The tire of claim 1 or claim 2, wherein:
each of the protrusions in the second patterned region configures a rib-shaped protrusion (52) formed in a zigzag shape as viewed along the direction orthogonal to the base face; and
a plurality of the rib-shaped protrusions are formed at the pitch (P).

## Patentansprüche

1. Reifen (10), der Folgendes umfasst:
einen dekorativen Abschnitt (14), der an einer Reifenaußenfläche geformt ist und der eine Grundfläche (40) einschließt; und
einen ersten gemusterten Bereich (21) und einen zweiten gemusterten Bereich (22), in deren jedem einer Vielzahl von Vorsprüngen (34, 36), die von der Grundfläche des dekorativen Abschnitts aus bis zu einer Vorsprungshöhe von 0,1 mm bis 1,0 mm vorspringen, in einem Abstand von 0,1 mm bis 1,0 mm geformt sind;
wobei sich Formen der Vorsprünge in dem ersten gemusterten Bereich und dem zweiten gemusterten Bereich, betrachtet entlang einer Richtung, senkrecht zu der Grundfläche, voneinander unterscheiden, **dadurch gekennzeichnet, dass** die Vorsprünge in dem ersten gemusterten Bereich miteinander verbunden sind und die Vorsprünge in dem zweiten gemusterten Bereich miteinander verbunden sind.

2. Reifen nach Anspruch 1, wobei jeder der Vorsprünge in dem ersten gemusterten Bereich einschließlich von Verlängerungsabschnitten (35A, 35B, 35C, 37A, 37B, 37C) geformt ist, die sich, betrachtet entlang der Richtung, senkrecht zu der Grundfläche, in einer Vielzahl von Richtungen von einem Ursprung (01, 02) aus erstrecken.

3. Reifen nach Anspruch 1, wobei:
jeder der Vorsprünge in dem zweiten gemusterten Bereich einen rippenförmigen Vorsprung (52) gestaltet, der, betrachtet entlang der Richtung, senkrecht zu der Grundfläche, in einer Zickzackgestalt geformt ist; und
eine Vielzahl der rippenförmigen Vorsprünge in dem Abstand (P) geformt ist.

## Revendications

1. Bandage pneumatique (10), comprenant :
une partie décorative (14) qui est formée au niveau d'une face externe du bandage pneumatique et qui inclut une face de base (40) ; et
une première région à motifs (21) et une deuxième région à motifs (22), dans chacune desquelles une pluralité de protubérances (34, 36) qui font saillie de la face de base de la partie décorative à une hauteur de saillie comprise entre 0,1 mm et 1,0 mm, sont formées à un pas compris entre 0,1 mm et 1,0 mm ;
les formes des protubérances dans la première région à motifs et dans la deuxième région à motifs étant différentes les unes des autres, vues le long d'une direction orthogonale à la face de base, **caractérisé en ce que** les protubérances dans la première région à motifs sont couplées les unes aux autres et les protubérances dans la deuxième région à motifs sont couplées les unes aux autres.

2. Bandage pneumatique selon la revendication 1, dans lequel chacune des protubérances dans la première région à motifs est formée en incluant des parties d'extension (35A, 35B, 35C, 37A, 37B, 37C) s'étendant dans une pluralité de directions à partir d'une origine (01, 02), vues le long de la direction orthogonale à la face de base.

3. Bandage pneumatique selon les revendications 1 ou 2, dans lequel :
chacune des protubérances dans la deuxième région à motifs configure une partie en forme de nervure (52) formée en une forme en zigzag, vues le long de la direction orthogonale à la face de base ; et
une pluralité des protubérances en forme de nervure sont formées au pas (P).
